# EUROPÄISCHE PATENTSCHRIFT

(11) **EP 0 853 537 B1**
(45) Veröffentlichungstag und Bekanntmachung des Hinweises auf die Patenterteilung: **30.06.1999**
(21) Anmeldenummer: 96943001.6
(22) Anmeldetag: 13.09.1996
(51) Int. Cl.: B29C 45/00, B29C 45/42

(54) **FORMSCHLIESSEINHEIT MIT EINER EINRICHTUNG ZUR ENTFERNUNG VON SPRITZTEILEN**
MOULD CLOSURE UNIT WITH A DEVICE FOR REMOVING INJECTION MOULDINGS
ENSEMBLE DE FERMETURE DE MOULE AVEC DISPOSITIF DE DEMOULAGE DE PIECES MOULEES PAR INJECTION

(30) Priorität: 02.10.1995 DE 19536567
(43) Veröffentlichungstag der Anmeldung: 22.07.1998
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: DE9601767
(87) Internationale Veröffentlichungsnummer: WO9712741

## Beschreibung

Die Erfindung betrifft eine Formschließeinheit mit einer Einrichtung zur Behandlung und/oder Entfernung von Spritzteilen nach dem Oberbegriff des Anspruches 1.

Aus der DE 42 28 140 A1 ist eine derartige Formschließeinheit mit einer Einrichtung zur Behandlung und/oder Entfernung von Spritzteilen bekannt, die als bauliche Einheit ausgebildet und insofern vielfach einsetzbar ist. Sie kann vor dem Einbau des Geräts beim Kunden auf Funktionsfähigkeit getestet werden und kann bedarfsweise von Maschine zu Maschine versetzt werden, sofern beim Kunden der Bedarf dafür besteht. Die Einheit ist hierzu lediglich noch an einem entsprechenden Anschlußorgan im Bereich des Werkzeugs der Spritzgießmaschine anzuschließen und mit dem Stromnetz zu verbinden. Die Einrichtung wird über einen Elektromotor wie z.B. einen Getriebemotor angetrieben, so daß eine Ansteuerung über ein Stirnradgetriebe erfolgt. Hierfür ist nicht nur ein zusätzlicher Aufwand zu treiben, sondern gerade in dem ohnehin von der Schließeinrichtung der Formschließeinheit beanspruchten Raum muß beim Einsatz des Auswerfers ein Raum zur Unterbringung von Getriebemotor und Getriebe vorgesehen werden. Dies erschwert den wechselnden Einsatz von Maschine zu Maschine und macht ihn mitunter sogar unmöglich.

Aus der DE 44 09 822 A1 ist ein Planeten-Wälz-Gewinde-Spindelantrieb bekannt, der eine äußerst präzise Ansteuerung des Auswerfers ermöglicht. Bei diesem an sich aus der EP-B 320 621 bekannten Spindelantrieb sind Planetenrollen vorgesehen, die mutterseitig in Rillen der Mutter eingreifen und spindelseitig mit dem Gewinde der Spindel in Verbindung stehen. Durch die Wälzbewegung sind dabei Steigungen bis in einen Bereich von 0,1 mm je Gewindesteigung möglich. Aufgrund der Wälzbewegung sind diese Antriebe zudem äußerst geräuscharm. Allerdings erfolgt eine platzraubende Trennung zwischen Motor und Antrieb, was gerade im Bereich des Auswerfers unerwünscht ist.

Im Bereich der elektromechanischen Maschinen sind auch elektrische Einrichtungen zur Behandlung und/oder Entfernung von Spritzteilen aus der Spritzgießform bekannt. Diese bekannten Einrichtungen haben meist das Problem, daß sie nicht hinreichend präzise arbeiten können oder daß nicht ausreichend Raum für diese Auswerfer zur Verfügung steht, da bei Elektromotoren stets eine Rotationsbewegung in eine Linearbewegung umgesetzt werden muß. Das linear bewegte Element des Antriebs benötigt dann aber entsprechenden Raum an der Spritzgießmaschine. Es ist in diesem Bereich aber auch unüblich, als Auswerfer-, Kernzieher- und Ausschraubeinrichtung dasselbe Element zu benutzen.

Eine Formschließeinheit ist z. B. aus dem DE 82 33 362 U1 für hydraulisch arbeitende Maschinen bekannt. Diese Einrichtung dient dort als Auswerfer zum Auswerfen der in einem Spritzgußprozeß gefertigten Spritzteile. Die hierfür erforderlichen Auswerfereinheiten oder alternativ Kernzieher oder Ausschraubeinrichtungen (DE 19 62 663 B2) sind jedoch üblicherweise schon allein aus Platzgründen fest im Bereich der Formschließeinheit angeordnet und nicht versetzbar.

Ausgehend von diesem Stand der Technik liegt der vorliegenden Erfindung die Aufgabe zugrunde, eine platzsparende elektromechanisch arbeitende Einrichtung zur Behandlung und/oder Entfernung von Spritzteilen zu schaffen, die als für sich funktionsfähige Einheit vielfach verwendbar ist.

Diese Aufgabe wird durch eine Formschließeinheit mit den Merkmalen des Anspruches 1 gelöst.

Als Antrieb wird hierbei ein Hohlwellenmotor verwendet, der das Betätigungselement, vorzugsweise eine Spindel zumindest teilweise in sich aufnimmt. Die Verwendung eines Hohlwellenmotors im Bereich des Auswerfers hat den Vorteil, daß er äußerst platzsparend gebaut werden kann, da keine zusätzlichen Bauelemente zur Umsetzung der Rotationsbewegung in eine Linearbewegung außerhalb des Hohlwellenmotors erforderlich sind. Gerade im Bereich des Schließmechanismus, in dem es darauf ankommt, die Kraft der Schließeinrichtung möglichst vollflächig auf den beweglichen Formträger zu übertragen, kann daher der Hohlwellenmotor unmittelbar den Auswerfer ansteuern. Da der Auswerfer nun grundsätzlich nicht mehr mit der Schließeinheit in Reihe angeordnet werden muß, wird die Formschließeinheit und damit die Spritzgießmaschine verkürzt. Selbst bei einer Anordnung in Reihe mit der Schließeinrichtung, ergibt sich immer noch eine kürzere Bauform als bei bekannten Auswerfern. Damit wird gleichzeitig die gesamte Spritzgießmaschine kompakter und günstiger.

### Kurzbeschreibung der Figuren

- Fig. 1: eine Draufsicht auf eine Spritzgießmaschine im Bereich der Formschließeinheit,
- Fig. 2: eine Seitenansicht einer Einrichtung zur Behandlung und/oder Entfernung von Spritzteilen,

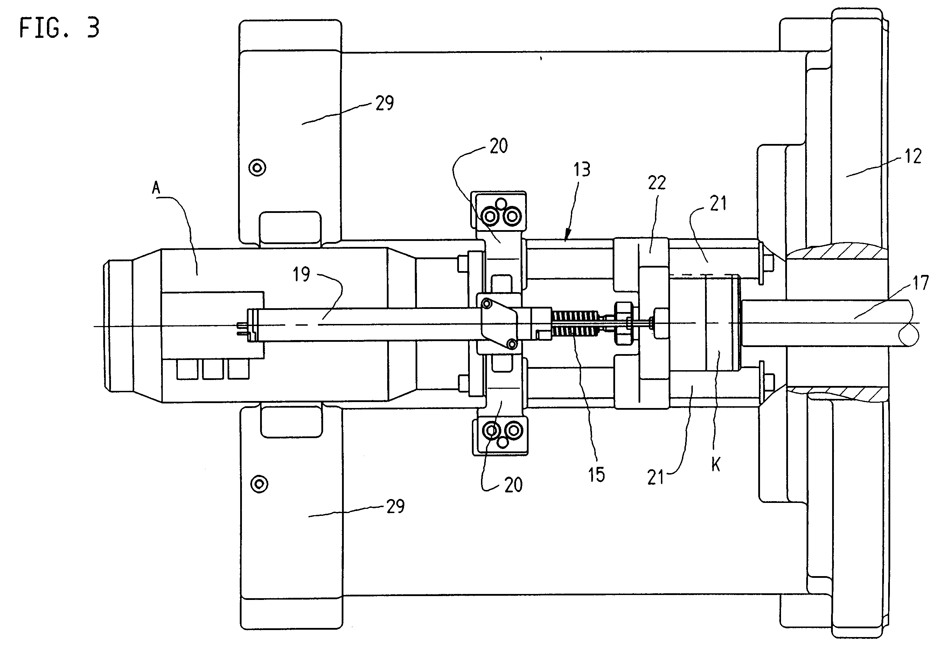

- Fig. 3: eine Draufsicht auf die Einrichtung gemäß Fig. 2,
- Fig. 4: eine Ansicht auf die bewegliche Formträgerplatte, wobei die Schließeinheit geschnitten ist,
- Fig. 5: eine Darstellung gemäß Fig. 2 mit einer unmittelbaren Befestigung der Einrichtung am Formträger,

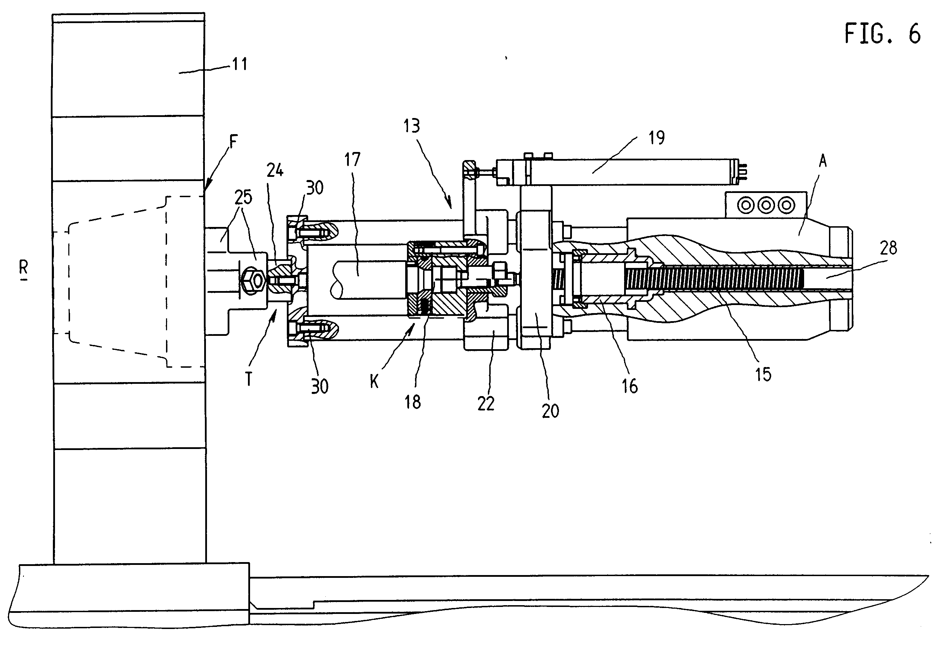

- Fig. 6: eine spritzgießseitige Anordnung der Einrichtung in einer Seitenansicht,
- Fig. 7: eine Draufsicht auf die Anordnung gemäß Fig. 6,
- Fig. 8: eine Seitenansicht auf eine Formschließeinheit mit zwei daran befestigten Einrichtungen.

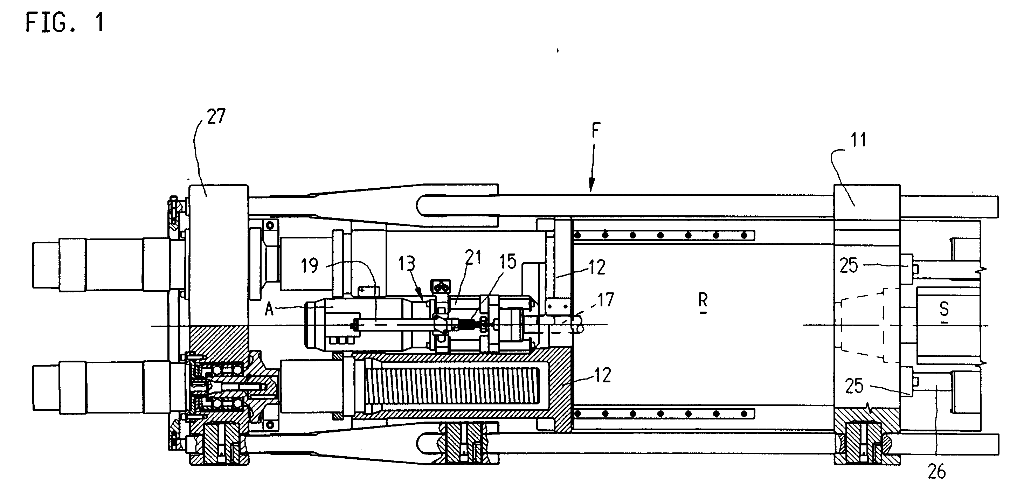

Fig. 1 zeigt einen Ausschnitt aus einer Spritzgießmaschine zur Verarbeitung plastifizierbarer Massen, pulvriger Massen oder keramischer Massen, wobei es sich meist um eine Kunststoff-Spritzgießmaschine handelt. Bei dieser Einrichtung wird zwischen einem stationären Formträger 11 und einem über eine Schließeinheit bewegbaren beweglichen Formträger 12 ein Formspannraum R gebildet. In diesem Formspannraum werden Werkzeuge M mit einem Formhohlraum 14 eingeführt, in denen Spritzteile 10 gefertigt werden. Hierzu ist üblicherweise am stationären Formträger 11 oder in der Trennebene eine Spritzgießeinheit S angeordnet, die das plastifizierte Material in den Formhohlraum einspritzt. Um die Schließkraft aufzubringen, stützt sich die Schließeinheit an einem Stützelement 27 ab. Zwischen Stützelement 27 und beweglichem Formträger 12 ist vorzugsweise mittig in der Spritzachse ein Raum zur Anordnung eines Auswerfers, eines Kernziehers oder eines Ausschraubmechanismus vorgesehen, die im folgenden zusammengefaßt als Einrichtung 13 zur Behandlung und/oder Entfernung von Spritzteilen angesprochen werden.

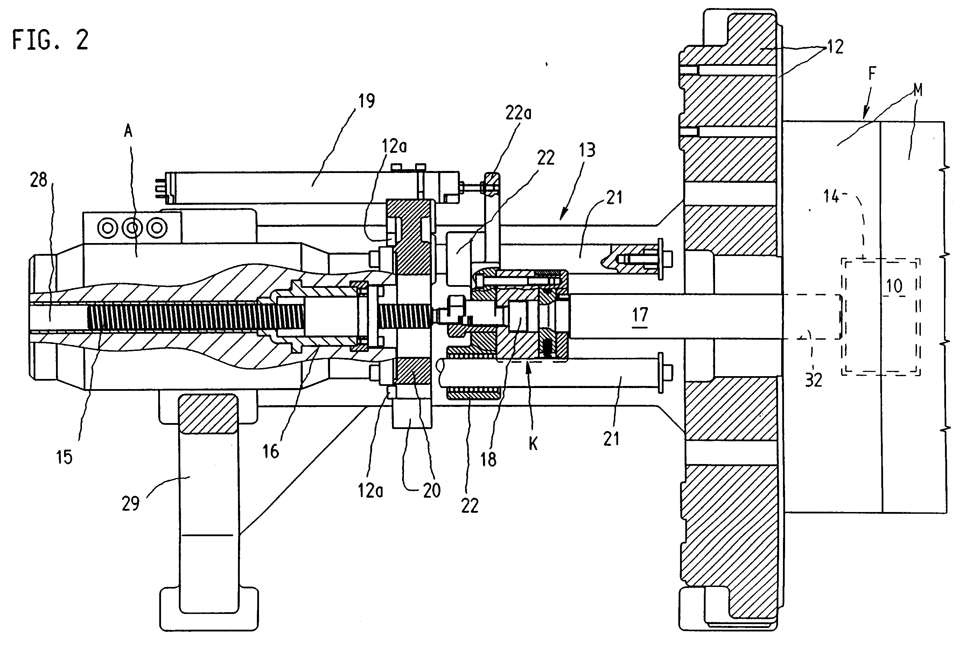

In Fig. 2 ist eine derartige Einrichtung 13 dargestellt. Die Einrichtung 13 weist ein Betätigungselement auf, im Ausführungsbeispiel eine Spindel 15, durch das ein in das Werkzeug M bis zum Formhohlraum 14 linear eindringendes Behandlungselement betätigbar ist. Um dieses Eindringen zu ermöglichen, besitzt in Fig. 2 der bewegliche Formträger eine Bohrung 12a und auch das Werkzeug M eine Bohrung 32. Das Behandlungselement schließt üblicherweise an die Wandung des Formhohlraums 14 an, um einerseits einen Zugriff auf das Spritzteil 10 zu besitzen, und um andererseits nach Möglichkeit nicht am Spritzteil 10 nach dessen Fertigstellung sichtbar zu sein. Eine derartige Einrichtung 13 wird nur eingesetzt, wenn das entsprechende Werkzeug M dies erfordert. Die Einrichtung 13 stützt sich im Bereich des Werkzeuges, d.h. am Werkzeug selbst, am stationären Formträger oder am beweglichen Formträger ab.

Als Antriebseinheit A für die Spindel 15 ist ein elektromechanischer Antrieb in Form eines platzsparenden Hohlwellenmotors vorgesehen. Die gesamte Einrichtung ist so ausgebildet, daß zumindest die Antriebseinheit A, das Abstützelement und das Betätigungselement eine in sich geschlossene und für sich von der Formschließeinheit F abnehmbare bauliche Einheit bilden. Dadurch ist diese Einheit beliebig versetzbar, sofern an der Spritzgießmaschine nur die entsprechenden Anschlüsse einerseits zum mechanischen Anschluß der Einrichtung 13 und andererseits zum Anschluß der Stromversorgung vorgesehen sind. Insofern können über die Maschine im Bereich des Werkzeuges M verteilt, verschiedene Anschlüsse vorgesehen sein, die dann steuerungsseitig über eine entsprechende Schnittstelle angesteuert werden können.

Die bauliche Einheit weist Kupplungsmittel 18 auf, durch die die Spindel 15 als Betätigungselement an das Behandlungselement 17 ankuppelbar ist. Dies hat den Vorteil, daß entsprechende Auswerfer mit dem Werkzeug ausgewechselt werden können oder daß die Behandlungselemente je nach ihrer Aufgabe, sei es als Auswerfer, Kernzieher oder Ausschraubmechanismus ausgetauscht werden können. Mit der baulichen Einheit verbunden ist eine Wegmeßeinrichtung 19, z.B. in Form eines Linearpotentiometers. Durch die Signale dieser Wegmeßeinrichtung kann die Antriebseinheit A geregelt oder gesteuert werden.

Gemäß Fig. 2 befindet sich die Antriebseinheit A auf Abstand vom Werkzeug M. Die Antriebseinheit, hier aus Platzgründen ein Hohlwellenmotor, ist an einer Halteplatte 20 angeflanscht. Im Ausführungsbeispiel der Fig. 2 erfolgt die Befestigung der Halteplatte 20 an einer Anformung 12a des beweglichen Formträgers.

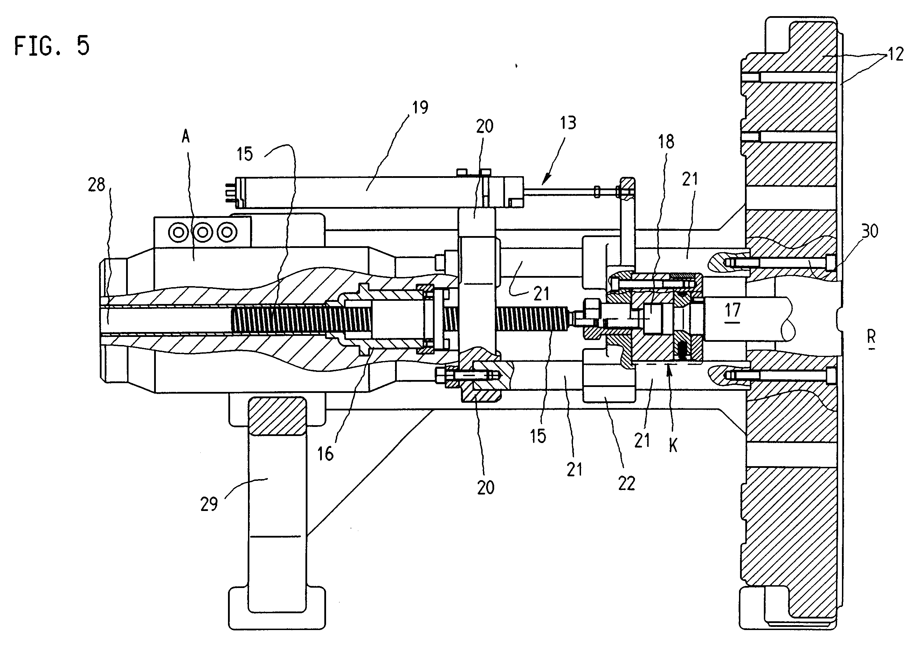

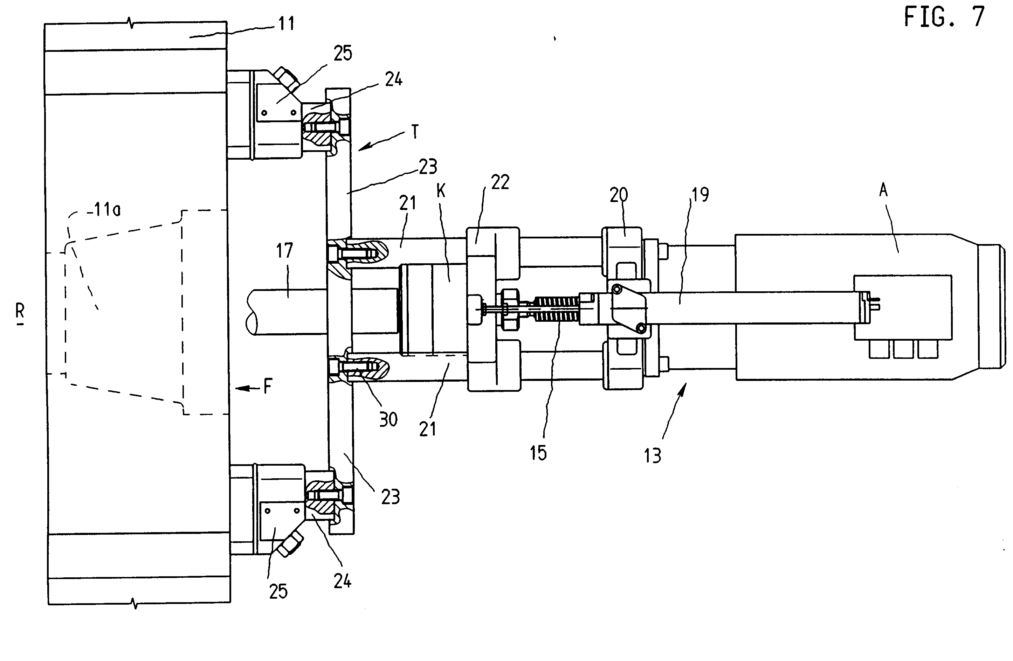

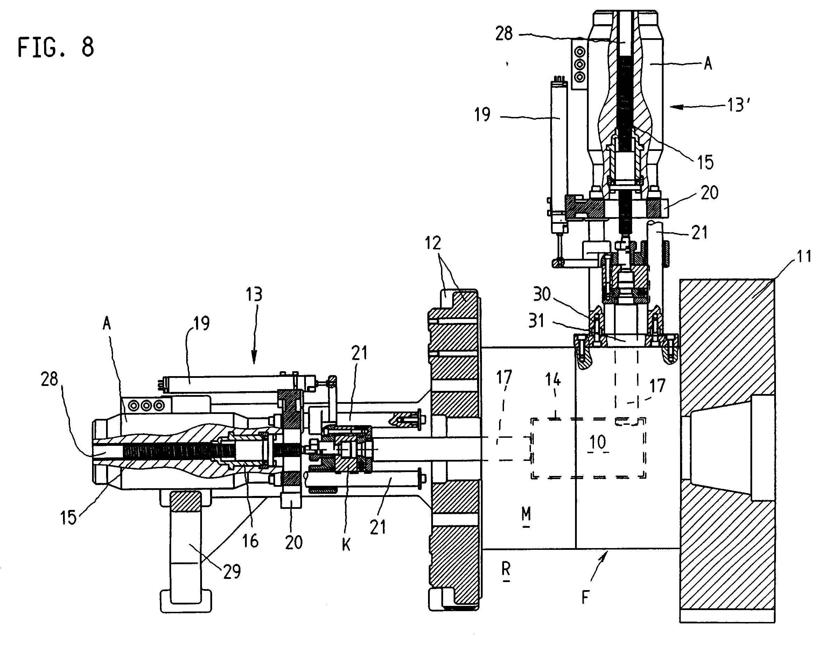

Die alternative Ausführungsform ergibt sich in Fig. 5. Auch dort ist der Motor an eine Halteplatte 20 angeflanscht, jedoch werden die Bolzen 21 über Befestigungsmittel 30 unmittelbar am beweglichen Formträger befestigt. Diese Befestigungsart erleichtert das Umsetzen der Einrichtung 13, z.B. in die Stellung gemäß Fig. 7 und 8.

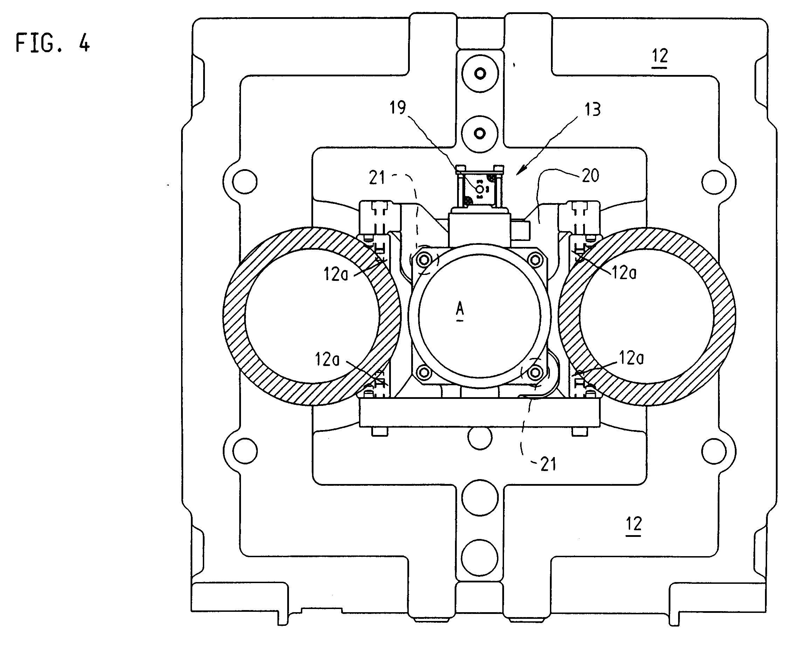

Im Ausführungsbeispiel ist die Antriebseinheit ein Spindelantrieb. Als Spindelantriebe kommen z.B. in Betracht Rollspindelantriebe, Kugelrollspindelantriebe, Wälzantriebe oder Planeten-Wälz-Gewinde-Spindelantriebe. Im Bereich des Hohlwellenmotors können beliebige Planetengetriebe integriert sein. Wird die Spindel 15 betätigt, so bewegt sie sich innerhalb des Hohlwellenmotors, wozu dort eine Ausnehmung 28 vorgesehen ist. In den Ausführungsbeispielen ist die Spindel 15 drehfest an einer Lagerung 22 befestigt, während die Mutter 16 rotiert. Die Lagerung 22 stellt auch sicher, daß die Spindel drehfest bleibt. Gemäß Fig. 4 sind zumindest zwei der Bolzen 21 gleichzeitig als Führungssäulen ausgebildet, auf denen die Lagerung 22 gleitet. Die Lagerung 22 besitzt zudem eine Anformung 22a, die den Anschluß der Wegmeßeinrichtung 19 ermöglicht. An der Lagerung 22 ist auch der Kupplungsbereich K für die Kupplungsmittel 18 zum Ankuppeln des Behandlungselements 17 angeordnet.

Wird als Spindelantrieb ein Planeten-Wälz-Gewinde-Spindelantrieb vorgesehen, so läßt sich der Spindelantrieb äußerst präzise ansteuern. Bei dieser Antriebsweise werden zwischen Mutter 16 und Spindel 15 Planetenrollen vorgesehen, die mit unterschiedlichem Außendurchmesser an Rillen der Mutter 16 und am Gewinde der Spindel 15 anliegen. Geringste Gewindesteigung und hohe Kraftumsetzung lassen sich dadurch verwirklichen, wobei der Antrieb zudem auch noch geräuscharm ist.

Da die Einrichtung 13 als bauliche Einheit leicht im Bereich der Formschließeinheit versetzbar ist, kann diese auch problemlos z.B. am stationären Formträger angeordnet werden. Eine äußerst vorteilhafte Anordnung ergibt sich, wenn die Einrichtung 13 hierbei die Spritzgießeinheit S nachahmt, die sich bei dieser Anordnung üblicherweise in der Trennebene befindet, um ein Einspritzen unmittelbar in die Trennebene vorzunehmen. Über Befestigungsmittel 30 ist die Einrichtung 13 hierzu mit einem Querträger 23 verbunden. Am Querträger 23 sind Holmnachahmungen 24 angeordnet, die in Anschlußorganen 25 festlegbar sind, die üblicherweise für die Befestigung der Holme 26 der Spritzgießeinheit S vorgesehen werden. Die Einrichtung 13 wird so angeordnet, daß sie in der Spritzachse zu liegen kommt, so daS sie durch die Einspritzöffnung 11a des stationären Formträgers in den Formspannraum R eindringen kann.

Fig. 8 macht den Vorteil der gewonnenen Modularität hinsichtlich der Einrichtung 13 deutlich. Einerseits kann eine Einrichtung 13 wie üblich am beweglichen Formträger 12 angeordnet werden, bei entsprechenden Spritzteilen 10 kann eine weitere Einrichtung 13' zugleich aber auch z. B. am Werkzeug M angeordnet werden. Die beiden Einrichtungen unterscheiden sich im vorliegenden Fall lediglich dadurch, daß bei der Einrichtung 13' eine Ausführungsform gemäß Fig. 5 gewählt wurde, so daß eine Anbindung der Bolzen 21 an das Werkzeug über die Befestigungsmittel 30 erfolgt. Die Befestigungsmittel 30 stehen mit einer Befestigungsplatte 31 in Verbindung, die ihrerseits am Werkzeug M befestigt ist.

Die Einrichtungen 13 können leicht an die unterschiedlichen Verwendungszwecke angepaßt werden. Arbeitet sie als Auswerfer oder Kernzieher, so ist es nicht erforderlich, daß das Behandlungselement 17 rotiert. Anders verhält es sich jedoch, wenn die Einrichtung 13 als Ausschraubmechanismus zum Ausdrehen von Spritzteilen benötigt wird, die ein Gewinde besitzen. In diesem Fall sollte die Spindel 15 rotieren. Dies wird ermöglicht, indem die Mutter 16 als eine Kupplung mittels Paßfeder zur Spindel 15 eingesetzt wird. Ein Leitgewinde sorgt dann für den notwendigen Vorschub. Ohnehin ist es grundsätzlich möglich, daß die Spindel rotiert, sofern lediglich eine entsprechende Drehlagerung im Bereich der Lagerung 22 vorgesehen wird.

Die Einrichtung ist somit modular aufgebaut und elektrisch steckfertig einschließlich der Wegmeßeinrichtung 19 ausgebildet. Über die als Führungsstangen ausgebildeten Bolzen 21 trägt sich die Baueinheit selbst. Dadurch kann sie problemlos von Maschine zu Maschine versetzt werden. Gleichzeitig ist sie auch als Kernzugeinheit verwendbar. Der Aufbau ermöglicht über den gesamten Hub die volle Kraft bei gleichförmiger Geschwindigkeit. Dennoch ist die Einrichtung 13 aufgrund ihres modularen Aufbaus z.B. auch an hydraulischen Maschinen einsetzbar.

## Patentansprüche

1. Formschließeinheit (F) mit einer Einrichtung (13) zur Behandlung und/oder Entfernung von Spritzteilen (10) an einer Spritzgießmaschine zur Verarbeitung plastifizierbarer Materialien mit
- einem stationären Formträger (11),
- einem beweglichen Formträger (12), der auf den stationären Formträger (11) zu und von diesem weg bewegbar ist,
- einem zwischen beweglichem und stationärem Formträger gebildeten Formspannraum (R), geeignet zur Aufnahme eines Werkzeuges (M) mit einem Formhohlraum (14) zur Herstellung der Spritzteile (10),
- einem Abstützelement, mit dem sich die Einrichtung (13) an der Formschließeinheit abstüzt,
- einem Betätigungselement für die Einrichtung (13), durch das ein in das Werkzeug (M) bis zum Formhohlraum (14) linear eindringendes Behandlungselement (17) betätigbar ist, falls eine Behandlung und/oder Entfernung von Spritzteilen (10) erforderlich ist,
- einer elektromechanischen Antriebseinheit (A) zum Antrieb des Betätigungselements,
- einer zumindest aus Antriebseinheit (A), Abstützelement und Betätigungselement gebildeten, in sich geschlossenen und für sich von der Formschließeinheit (F) abnehmbaren baulichen Einheit, wobei sich die Einrichtung über das Abstützelement am Werkzeug (M), am stationären Formträger oder am beweglichen Formträger abstützt, dadurch gekennzeichnet, daß die Antriebseinheit (A) ein das Betätigungselement zumindest teilweise in sich aufnehmender Hohlwellenmotor ist.

2. Formschließeinheit nach Anspruch 1, dadurch gekennzeichnet, daß die bauliche Einheit eine Wegmeßeinrichtung (19) aufweist, durch deren Signal die Antriebseinheit (A) steuer- oder regelbar ist.

3. Formschließeinheit nach Anspruch 1, dadurch gekennzeichnet, daß die Antriebseinheit (A) an einer als Abstützelement ausgebildeten Halteplatte (20) befestigt ist, die über Bolzen (21) auf Abstand vom Werkzeug gehalten ist.

4. Formschließeinheit nach Anspruch 3, dadurch gekennzeichnet, daß die Antriebseinheit (A) über die Bolzen (21) am beweglichen Formträger (12) festlegbar ist.

5. Formschließeinheit nach Anspruch 3, dadurch gekennzeichnet, daß die Antriebseinheit (A) über die Bolzen (21) am stationären Formträger (11) festlegbar ist.

6. Formschließeinheit nach Anspruch 3, dadurch gekennzeichnet, daß auf den Bolzen (21) eine Lagerung (22) für das linear bewegte Betätigungselement geführt ist, an dem vorzugsweise auch der Kupplungsbereich (K) für das Behandlungselement (17) angeordnet ist.

7. Formschließeinheit nach Anspruch 1, dadurch gekennzeichnet, daß die bauliche Einheit am stationären Formträger (11) befestigbar ist.

8. Formschließeinheit nach Anspruch 7, dadurch gekennzeichnet, daß die bauliche Einheit über eine Führungsholme (26) einer Spritzgießeinheit (S) nachahmende Tragkonstruktion (T) an Anschlußorganen (25) im Bereich des stationären Formträgers (11) festlegbar ist, die für die Befestigung der Führungsholme (26) vorgesehen sind, und daß das Betätigungselement durch die Einspritzöffnung (11a) bis in den Formspannraum (R) eindringt.

9. Formschließeinheit nach Anspruch 1, dadurch gekennzeichnet, daß bei Verwendung der Einrichtung (13) als Ausschraubeinrichtung eine Spindel (15) der Antriebseinheit (A) rotiert.

10. Formschließeinheit nach einem der vorhergehenden Ansprüche, dadurch gekennzeichnet, daß die Einrichtung (13) als Kernzieher verwendet wird.

11. Formschließeinheit nach einem der vorhergehenden Ansprüche, dadurch gekennzeichnet, daß die Einrichtung (13) als Auswerfer verwendet wird.

## Claims

1. Mould closing unit (F), having an arrangement (13) for treating and/or removing injection moulded parts (10) on an injection moulding machine for processing plasticisable materials, said unit having
- a stationary mould carrier (11),
- a movable mould carrier (12) which is displaceable towards and away from the stationary mould carrier (11),
- a mould clamping chamber (R), which is formed between the movable and stationary mould carriers and which is suitable for accommodating a tool (M) provided with a mould cavity (14) for producing the injection moulded parts (10),
- a supporting element, with which the arrangement (13) is supported on the mould closing unit,
- an actuating element for the arrangement (13), by means of which element a treatment element (17), which penetrates linearly into the tool (M) as far as the mould cavity (14), is actuatable if injection moulded parts (10) need to be treated and/or removed,
- an electromechanical drive unit (A) for driving the actuating element,
- a self-contained structural unit, formed at least from drive unit (A), supporting element and actuating element and removable per se from the mould closing unit (F),
the arrangement being supported on the tool (M), on the stationary mould carrier or on the movable mould carrier via the supporting element, characterised in that the drive unit (A) is a hollow shaft motor which accommodates the actuating element, at least partially, therein.

2. Mould closing unit according to claim 1, characterised in that the structural unit has a distance-measuring arrangement (19), the drive unit (A) being controllable or adjustable by the signal of said arrangement.

3. Mould closing unit according to claim 1, characterised in that the drive unit (A) is mounted on a retaining plate (20), which is provided as the supporting element and is retained at a spacing from the tool via bolts (21).

4. Mould closing unit according to claim 3, characterised in that the drive unit (A) is securable on the movable mould carrier (12) via the bolts (21).

5. Mould closing unit according to claim 3, characterised in that the drive unit (A) is securable on the stationary mould carrier (11) via the bolts (21).

6. Mould closing unit according to claim 3, characterised in that a support (22) for the linearly moving actuating element is guided on the bolts (21), on which actuating element the coupling region (K) for the treatment element (17) is also preferably disposed.

7. Mould closing unit according to claim 1, characterised in that the structural unit is mountable on the stationary mould carrier (11).

8. Mould closing unit according to claim 7, characterised in that the structural unit is securable on connection members (25) in the region of the stationary mould carrier (11) via a supporting structure (T) which resembles guide bars (26) of an injection moulding unit (S), said connection members being provided for the securement of the guide bars (26), and in that the actuating element penetrates into the mould clamping chamber (R) through the injection opening (11a).

9. Mould closing unit according to claim 1, characterised in that a spindle (15) of the drive unit (A) rotates when the arrangement (13) is used as an unscrewing arrangement.

10. Mould closing unit according to one of the preceding claims, characterised in that the arrangement (13) is used as a core extractor.

11. Mould closing unit according to one of the preceding claims, characterised in that the arrangement (13) is used as an ejector.

## Revendications

1. Ensemble de fermeture de moule (F) comportant un dispositif (13) pour la manipulation et/ou le démoulage de pièces moulées par injection (10) sur une machine à mouler par injection, pour la transformation de matières plastifiables comportant
- un porte-moule fixe (11)
- un porte-moule mobile (12) qui est déplaçable vers le porte-moule fixe (11) et à partir de celui-ci,
- un espace de serrage de moule (R) formé entre le porte-moule mobile et le porte-moule fixe, destiné à recevoir un outil (M) avec une cavité de moulage (14) pour la fabrication des pièces moulées par injection (10),
- un élément de soutien par lequel le dispositif (13) prend appui contre l'ensemble de fermeture de moule,
- un élément d'actionnement pour le dispositif (13) au moyen duquel l'élément de manipulation (17) pénétrant linéairement dans l'outil (M) jusqu'à la cavité de moulage (14), est actionnable, dans le cas où une manipulation et/ou un enlèvement de pièces moulées par injection (10) est nécessaire,
- un ensemble d'entraînement électromécanique (A) pour l'entraînement de l'élément d'actionnement,
- un ensemble de construction constitué d'au moins l'ensemble d'entraînement (A), de l'élément de soutien et de l'élément d'actionnement, fermé en soi et pouvant être enlevé indépendamment de l'ensemble de fermeture de moule (F), le dispositif prenant appui, par l'intermédiaire de l'élément de soutien, contre l'outil (M), contre le porte-moule fixe ou contre le porte-moule mobile, caractérisé en ce que l'ensemble d'entraînement (A) est un moteur à arbre creux recevant au moins en partie l'élément d'actionnement.

2. Ensemble de fermeture de moule selon la revendication 1, caractérisé en ce que l'ensemble de construction comporte un dispositif de mesure de distance (19), dont le signal permet de commander ou de régler l'ensemble d'entraînement (A).

3. Ensemble de fermeture de moule selon la revendication 1, caractérisé en ce que l'ensemble d'entraînement (A) est fixé à une plaque de maintien (20) formée en tant qu'élément de soutien, qui est maintenue à distance de l'outil par des goujons (21).

4. Ensemble de fermeture de moule selon la revendication 3, caractérisé en ce que l'ensemble d'entraînement (A) peut être fixé au porte-moule mobile (12) par les goujons (21).

5. Ensemble de fermeture de moule selon la revendication 3, caractérisé en ce que l'ensemble d'entraînement (A) peut être fixé au porte-moule fixe (11) par les goujons (21).

6. Ensemble de fermeture de moule selon la revendication 3, caractérisé en ce que sur les goujons (21) est guidé un support (22) pour l'élément d'actionnement déplacé linéairement, sur lequel est disposée de préférence aussi la zone d'accouplement (K) pour l'élément de manipulation (17).

7. Ensemble de fermeture de moule selon la revendication 1, caractérisé en ce que l'ensemble de construction peut être fixé au porte-moule fixe (11).

8. Ensemble de fermeture de moule selon la revendication 7, caractérisé en ce que l'ensemble de construction peut être fixé, par l'intermédiaire d'une construction de support (T), simulant des longerons de guidage (26) d'un ensemble de moulage par injection (S), à des organes de raccordement (25) dans la zone du porte-moule fixe (11), qui sont prévus pour la fixation des longerons de guidage (26), et en ce que l'élément d'actionnement pénètre à travers l'ouverture d'injection (11a) jusque dans l'espace de serrage de moule (R).

9. Ensemble de fermeture de moule selon la revendication 1, caractérisé en ce que dans le cas de l'utilisation du dispositif (13) en tant que dispositif de dévissage, une broche (15) de l'ensemble d'entraînement (A) tourne.

10. Ensemble de fermeture de moule selon l'une des revendications précédentes, caractérisé en ce que le dispositif (13) est utilisé comme démouleur de noyau.

11. Ensemble de fermeture de moule selon l'une des revendications précédentes, caractérisé en ce que le dispositif (13) est utilisé comme éjecteur.
